# EUROPEAN PATENT SPECIFICATION

(11) **EP 1 324 810 B1**
(45) Date of publication and mention of the grant of the patent: **10.02.2010**
(21) Application number: 01969828.1
(22) Date of filing: 19.09.2001
(51) Int. Cl.: B01D 1/22, B01D 45/16

(54) **METHOD AND DEVICE FOR THE PRODUCTION OF PURE STEAM**
VERFAHREN UND VORRICHTUNG ZUR REINDAMPF-HERSTELLUNG
PROCEDE ET APPAREIL DE PRODUCTION DE VAPEUR PURE

(30) Priority: 25.09.2000 FI 20002104
(43) Date of publication of application: 09.07.2003
(73) Proprietor: Steris Europe, Inc. Suomen Sivuliike, 04300 Tuusula (FI)
(72) Inventor: SALMISUO, Mauri, FIN-04320 Tuusula (FI)
(74) Representative: Langenskiöld, Tord Karl Walter
(86) International application number: PCT/FI2001/000810
(87) International publication number: WO 2002/024299

(56) References cited:
- DE-C- 870 243
- US-A- 4 054 485
- US-A- 4 321 106

## Description

### Field of the invention

The invention relates to the production of highly pure steam for special purposes. Particularly, the invention relates to the production of pure steam using a falling-film evaporator and rising channels for separating water droplets and impurities.

### Background of the invention

Highly purified steam is required for various medical purposes, such as production of pharmaceuticals, demanding sterilization applications and production of water for injection. A method and device for production of such steam are disclosed in US patent 3,875,017. A falling film evaporator as disclosed therein comprises a vertical bundle of evaporation tubes enclosed into a heating jacket, which in turn is enclosed by an outer shell so that an annular space is formed between the heating jacket and the outer shell. Water fed into the evaporating tubes at their upper end flows down the inner surface of the tubes, thereby evaporating and forming steam, which emerges at the lower ends of the tube bundle. The flow of steam makes a 180° turn and flows upwards in the space between the heating jacket and the outer shell. Fins forming a spiral path are attached to the outer surface of the heating jacket, leaving a narrow gap between their edges and the inner surface of the shell. The steam flowing upwards is forced into a spiraling path, whereby water droplets in the evaporation product are driven towards the outer shell by centrifugal force.

The droplets adhere to the outer shell wall and form a film of water flowing downwards and finally forming a pool of liquid at the bottom of the device. From there, a stream of water proportional to the amount of pure steam produced is withdrawn as a reject stream. As the water phase in the evaporation product tends to be rich in impurities, these are enriched into the reject stream. From above the spiral path, pure steam is led to the consumption points or to a condenser for producing highly pure water.

A variation of the device is disclosed in US patent 5,983,842. The evaporation product emerging from the lower ends of the tube bundle is brought into a circular motion by baffle fins at the bottom of the device, and the rising space narrows towards the top. The spiral path is arranged into the top of the rising space and it is closed, i.e. the fins reach the inner surface of the outer shell. No downwards-flowing reject phase is formed, but the droplets accelerate and are collected into an annular channel above the spiral path. A separate tube returns the resulting water phase to the bottom of the device.

### Summary of the invention

An improved method and device have been invented for enhancing the separation of water droplets and impurities in the rising channel of a falling film evaporator for production of highly pure steam. A further object of the invention is a system for the production and distribution of pure steam, the system comprising the improved device.

The device according to the present invention is used together with a vertical tube bundle with a heating jacket, i.e. a conventional type of falling film evaporator. The evaporation product emerges from the lower end of the tube bundle.

According to the invention, the device for separating water droplets and impurities from the evaporation product comprises a length of downpipe through which the evaporation products initially flows before making a 180 ° turn and entering a rising channel between the outer surface of the downpipe and the inner surface of an intermediate shell. The downpipe may be initially tapered, forming a funnel.

Spiral fins adapted in the upper part of the rising channel set the evaporation product in an upwardly spiraling, circular motion. According to the present invention, the intermediate shell is provided with at least one opening or outlet slit, allowing droplets carried by centrifugal force to the periphery of the spiral path to leave. Outside the openings, a cooled surface in the outer shell ensures, that condensation of steam takes place.

Steam condensing on the inner surface of the outer shell causes a radial outward stream carrying steam, water droplets and impurities to the said inner surface. A water film is formed which flows down said surface in the space between the outer and intermediate shells. A pool of water is formed on the bottom of the unit, submerging the lower edge of the intermediate shell. A controlled stream of reject water is withdrawn from the pool. The pure, dry steam leaving the upper end of the spiral path exits the device.

The invention enables the use of detachable inner parts in the steam generator, which provides for easy maintenance and cleaning, as the whole of the apparatus need not be pressure vessel certified.

### Brief description of the drawings

The invention is disclosed in detail below with reference to the accompanying drawings, wherein
Figure 1 shows a steam generator comprising a falling film evaporator provided with a separator unit according to the present invention,
Figure 2 shows details of a separator unit according to the present invention,
Figure 3 is a top view section of the unit offing. 2, and
Figure 4 shows a system for the production of pure steam, which system includes the device of Figure 2.

### Disclosure of the invention

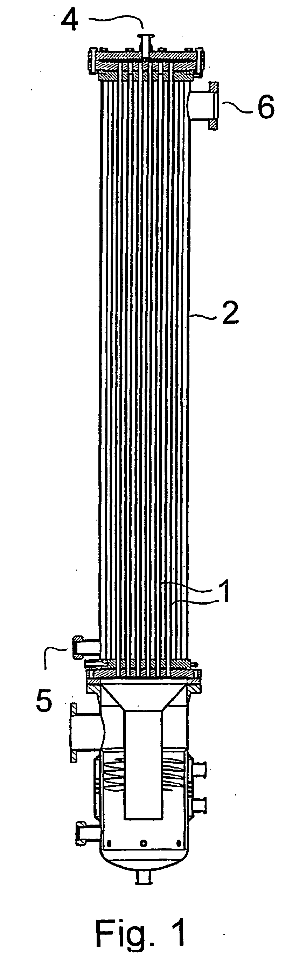

Figure 1 shows a shell-and-tube heat exchanger arranged in a vertical position to form a falling film evaporator. Evaporation tubes 1 are enclosed in a jacket 2, through which a heating medium is conducted via in- and outlets 4 and 5. Feed water enters the upper ends of the evaporation tubes through inlet 6. At the lower end of the evaporator, a separating device according to the invention is connected.

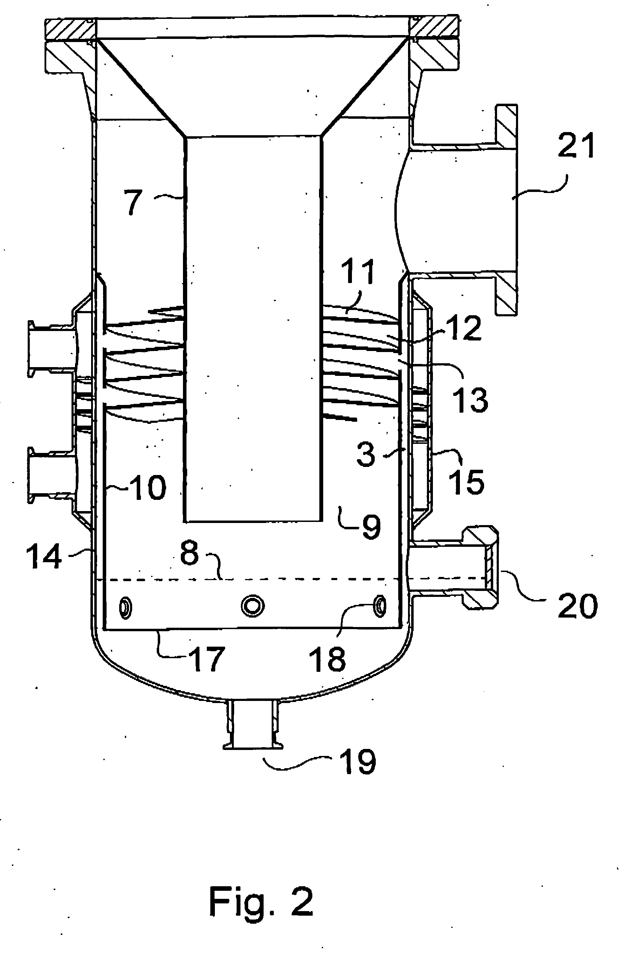

The construction of the separating device is shown in Figure 2. The evaporation product enters downpipe 7. In the embodiment shown, the upper end of the downpipe is shaped as a funnel in order to maintain the same outer diameter in the separator as in the evaporator. The evaporation product emerges from the lower end of the downpipe, encounters the water surface 8 on the bottom of the device, and turns 180 ° to enter the annular rising channel 9 between the downpipe and intermediate shell 10. Spiral fins 11 form a spiral path 12 for the evaporation product.

The spiral movement of the evaporation product causes centrifugal force which force water droplets in the product to the periphery of path 12, Foreign matter present in the evaporation product may act as nuclei for condensation, and this phenomenon thus enhances the transport of this matter to the periphery of the spiral path. Pure, dry steam leaves spiral path 12 and exits the device at connection 21.

At least one opening 13 is provided the intermediate shell 10 to allow droplets to enter space 3 between the intermediate shell and outer shell 14. Outer shell 14 is provided with a temperature control jacket 15. As this jacket is used to cool the inner surface of shell 14, steam in space 3 condense on said inner surface and form a descending water film. The condensation ensures, that no backflow occurs into spiral path 12 through openings 13. A suitable number of openings 13 of an appropriate shape may be provided Droplets and impurities driven to the inner wall of shell 10 by centrifugal force pass through the openings, and are carried to the cooled inner wall of outer shell 14 by the radial outward stream caused by condensation of steam.

The openings may be designed as vertical slits in the outer periphery of the spiral path, i.e. in shell 10. One or more slits running in parallel to the spiral fins is also possible, as well as circular, oval or other shapes of opening; possibly arranged with edges enhancing the capture of droplets in circular motion along the spiral path.

The surface of the pool of water formed from condensate and droplets is kept above lower edge 17 of intermediate shell 10; thus flow of evaporation product is possible only along the route described. Spacer indents 18 may be provided to center the lower end of the intermediate shell. A reject flow rich in impurities is withdrawn at 19. A sight glass 20 may be provided to monitor the water level.

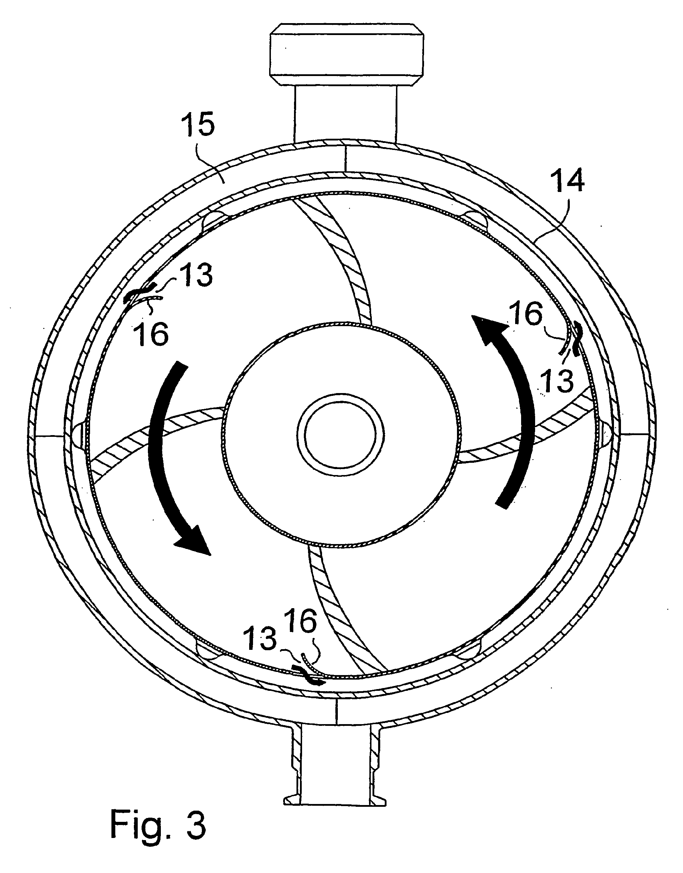

Figure 3 shows a top view of the unit of Figures with the top cut off at the level of the temperature control jacket. The large arrows indicate the circular movement of the evaporation product in the spiral path. Openings 13 are shown with baffles 16 to enhance the capture of droplets and impurities carried to the periphery of the path, as shown by the small arrows

Preferably, the temperature of outer shell 14 is be controlled to effect a suitable rate of condensation. To conserve energy, feed water can be used in jacket 15. By means of this temperature control, the amount of reject water formed can be controlled according to load and purity requirements.

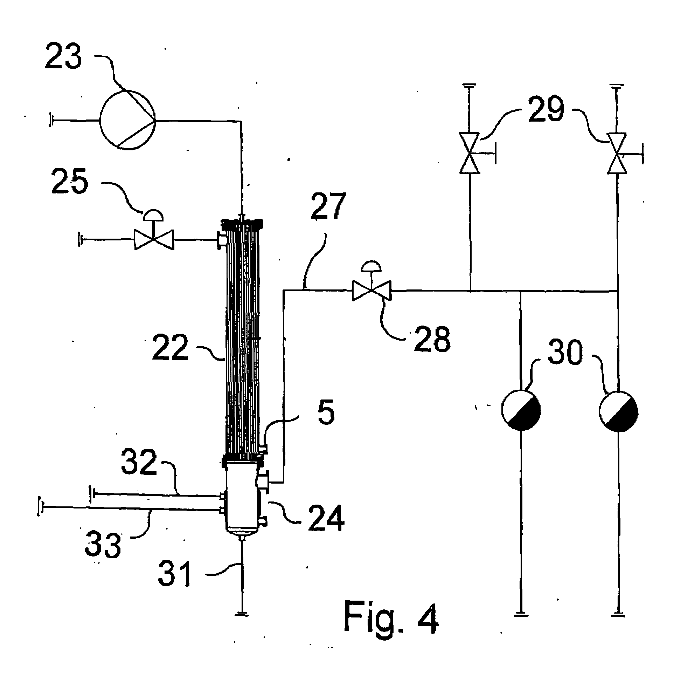

Figure 4 shows a system for the production of pure steam. To a falling film evaporator 22, feed water is provided by means of pump 23. The evaporator comprises a separating unit 24 according to the present invention. Heating steam enters through valve 25, while condensate leaves by connection 5 (tubing not shown). Pure steam leaves the evaporator via line 27 and control valve 28, and enters the distribution network which includes pure steam line valves 29 and pure steam traps 30. Reject water enriched in impurities leaves separating unit 24 through line 31. Feed and return lines 32,33 for the temperature control jacket are provided.

In prior art devices, corrosion and the closed structure of the separator units caused problems as the steam paths were not easily accessible The inner structure was integrated with the pressure vessel shell, and could not be altered without going through the tedious procedure involved with pressure vessel construction. In the disclosed device according to the invention, only the outer shell part must fulfil pressure vessel requirements. Accordingly, the inner parts and/or details thereof can be manufactured from any required, corrosion-proof materials, and may be removed for cleaning and inspection. Such materials include fluorocarbon polymers, ceramic materials and special steels or other metals which need not be suited for being joined by welding to the pressure vessel shell. The inner parts may also be exchanged to suit different throughputs and purity requirements.

## Claims

1. A method for purifying an evaporation product to produce pure steam, wherein the evaporation product is set in a spiraling rotational motion to separate droplets by centrifugal force, **characterized by**
providing an evaporation product by means of a falling film evaporator (22)
conducting said evaporation product into an annular rising channel comprising spiral fins (11) forming a spiral path (12),
providing at least one opening (13) in the outer surface of said spiral path
collecting droplets and impurities on an actively cooled surface outside said at least one opening.

2. The method according to claim 1, **characterized by** the temperature of the cooled surface being controlled by means of water used as feed water.

3. A falling film evaporator comprising a device for the purification of an evaporation product to produce pure steam having
- an outer shell (14),
- an annular rising channel (9) comprising spiral fins (11) forming a spiral path (12) between an intermediate shell (10) and a downpipe (7)
- a space (16) between the intermediate shell (10) and the outer shell (14)
- at least one opening (13) in the intermediate shell (10),
- a temperature control jacket (15) for cooling a surface on the outer shell (14) outside said at least one opening(s) (13),
**characterised by** being connected to the lower end of the falling film evaporator (22) such that the evaporation product can first enter the downpipe (7) and subsequently the annular rising channel (9).

4. The device according to claim 3, **characterized by** the openings (13) being vertical slits.

5. The device according to claim 3 or 4, **characterized by** at least one detail within the pressure vessel shell being detachable.

6. The device according to any claim 3 - 5, **characterized by** at least one detail within the pressure vessel shell being made from a corrosive resistant material different from that of the pressure vessel shell.

## Patentansprüche

1. Verfahren zur Reinigung eines Verdampfungsprodukts, um Reindampf herzustellen, wobei das Verdampfungsprodukt in eine Spiraldrehbewegung versetzt wird, um durch Zentrifugalkraft Tröpfchen abzuscheiden, **gekennzeichnet durch**
Bereitstellen eines Verdampfungsprodukts mittels eines Rieselfilm-Verdampfers (22),
Leiten des Verdampfungsprodukts in einen ringförmigen Steigkanal mit Spiralrippen (11), die einen spiralförmigen Weg (12) bilden,
Bereitstellen zumindest einer Öffnung (13) in der Außenfläche des spiralförmigen Weges,
Sammeln von Tröpfchen und Verunreinigungen auf einer aktiv gekühlten Oberfläche außerhalb der zumindest einen Öffnung.

2. Verfahren nach Anspruch 1, **dadurch gekennzeichnet, dass** die Temperatur der gekühlten Oberfläche mittels als Speisewasser verwendeten Wassers gesteuert wird.

3. Rieselfilm-Verdampfer mit einer Vorrichtung zur Reinigung eines Verdampfungsprodukts, um Reindampf herzustellen, mit
- einem Außenmantel (14),
- einem ringförmigen Steigkanal (9) mit Spiralrippen (11), die zwischen einem Zwischenmantel (10) und einem Fallrohr (7) einen spiralförmigen Weg (12) bilden,
- einem Raum (16) zwischen dem Zwischenmantel (10) und dem Außenmantel (14),
- zumindest einer Öffnung (13) im Zwischenmantel (10),
- einer Temperatursteuerungshülle (15) zum Kühlen einer Oberfläche auf dem Außenmantel (14) außerhalb der zumindest einen Öffnung (13),
**dadurch gekennzeichnet, dass** die Vorrichtung mit dem unteren Ende des Rieselfilm-Verdampfers (22) verbunden ist, so dass das Verdampfungsprodukt zuerst in das Fallrohr (7) und anschließend in den ringförmigen Steigkanal (9) eintreten kann.

4. Vorrichtung nach Anspruch 3, **dadurch gekennzeichnet, dass** die Öffnungen (13) vertikale Schlitze sind.

5. Vorrichtung nach Anspruch 3 oder 4, **dadurch gekennzeichnet, dass** zumindest ein Einzelteil innerhalb des Druckgefäßmantels lösbar ist.

6. Vorrichtung nach einem der Ansprüche 3 bis 5, **dadurch gekennzeichnet, dass** zumindest ein Einzelteil innerhalb des Druckgefäßmantels aus einem korrosionsbeständigen Material hergestellt ist, das sich von dem des Druckgefäßmantels unterscheidet.

## Revendications

1. Procédé de purification d'un produit d'évaporation afin de produire de la vapeur pure, dans lequel le produit d'évaporation est mis en mouvement de rotation en spirale afin de séparer des gouttelettes par la force centrifuge, **caractérisé par**:
la préparation d'un produit d'évaporation au moyen d'un évaporateur à film tombant (22) la conduite dudit produit d'évaporation dans un canal montant annulaire comprenant des ailettes en spirale (11) formant un trajet en spirale (12),
la formation d'au moins une ouverture (13) sur la surface externe dudit trajet en spirale,
la collecte de gouttelettes et d'impuretés sur une surface activement refroidie à l'extérieur de ladite au moins une ouverture.

2. Procédé selon la revendication 1, **caractérisé par** la température de la surface refroidie qui est commandée au moyen d'eau utilisée comme eau d'alimentation.

3. Evaporateur à film tombant comprenant un dispositif destiné à assurer la purification d'un produit d'évaporation afin de produire de la vapeur pure comportant:
- une enveloppe externe (14),
- un canal montant annulaire (9) comprenant des ailettes en spirale (11) formant un trajet en spirale (12), entre une enveloppe intermédiaire (10) et une tuyauterie inférieure (7)
- un espace (16) entre l'enveloppe intermédiaire (10) et l'enveloppe externe (14)
- au moins une ouverture (13) sur l'enveloppe intermédiaire (10),
- une enveloppe de commande de température (15) destinée à refroidir une surface sur l'enveloppe externe (14) à l'extérieur de ladite au moins une ouverture (13),
**caractérisé par le fait qu'**il est raccordé à l'extrémité inférieure de l'évaporateur à film tombant (22) de telle sorte que le produit d'évaporation peut d'abord entrer par la tuyauterie inférieure (7) et ensuite le canal montant annulaire (9).

4. Dispositif selon la revendication 3, **caractérisé par** les ouvertures (13) constituées par des fentes verticales.

5. Dispositif selon la revendication 3 ou 4, **caractérisé par** au moins un élément de détail à l'intérieur de l'enveloppe de cuve de pression qui peut être séparé.

6. Dispositif selon l'une quelconque des revendications 3 à 5, **caractérisé par** au moins un élément de détail à l'intérieur de l'enveloppe de cuve de pression qui est réalisé en un matériau résistant à la corrosion différent de celui de l'enveloppe de cuve de pression.
